Europäisches Patentamt

European Patent Office

Office européen des brevets

(19)

(11) Publication number: **0 100 379**
**B1**

(12) EUROPEAN PATENT SPECIFICATION

(45) Date of publication of patent specification: 08.10.86

(51) Int. Cl.⁴: **G 02 B 3/00**

(21) Application number: 82304020.9

(22) Date of filing: 29.07.82

(54) Plastic lens.

(43) Date of publication of application:
15.02.84 Bulletin 84/07

(45) Publication of the grant of the patent:
08.10.86 Bulletin 86/41

(84) Designated Contracting States:
AT BE CH DE FR GB IT LI NL SE

(56) References cited:
DE-C- 418 240
DE-U-1 777 075
DE-U-1 983 797
DE-U-7 714 782
GB-A-1 245 929
US-A-3 205 774

Patent Abstracts of Japan vol. 3, no. 155, 19
December 1979 page 69E160

(73) Proprietor: OLYMPUS OPTICAL CO., LTD.
43-2, 2-chome, Hatagaya Shibuya-ku
Tokyo 151 (JP)

(72) Inventor: Yamada, Noboru
No. 39-6, Fujimi-cho
Hachioji-shi Tokyo (JP)

(74) Representative: Boydell, John Christopher et al
Stevens, Hewlett & Perkins 5 Quality Court
Chancery Lane
London, WC2A 1HZ (GB)

Courier Press, Leamington Spa, England.

## Description

The present invention relates to an optical lens and more particularly to a plastic lens which is adapted to be used in an optical system.

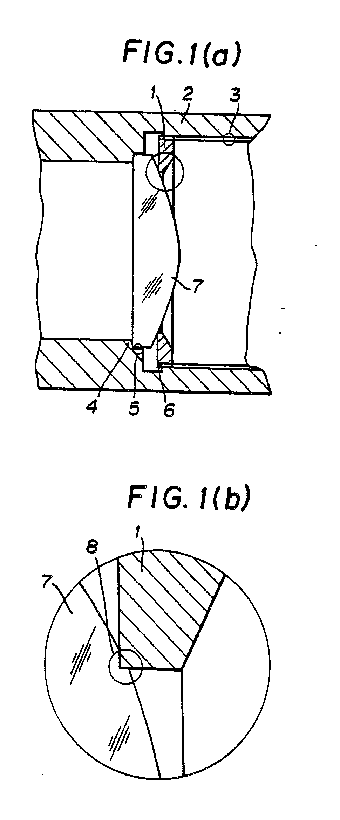

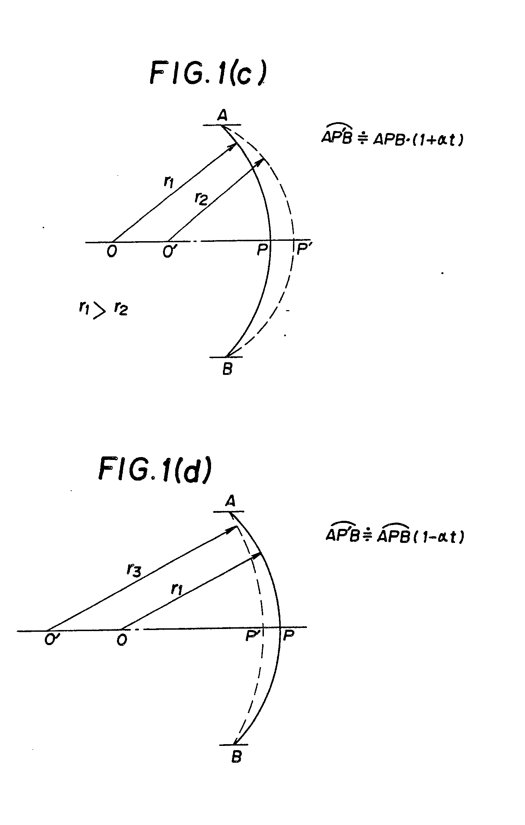

Recently, plastic lenses have been widely used in optical systems, e.g. in photographic cameras or laser systems. At first, a conventional technique used to mount a plastic lens in a lens mount will be explained with reference to Figures 1-a to Figure 1-e of the accompanying drawings in which:—

Figure 1-a is a diagrammatic cross sectional view of a conventional lens system;

Figure 1-b is an enlarged detail of the portion A shown in Figure 1-a;

Figure 1-c is a diagram showing deformation of the lens shown in Figure 1-a at high temperature;

Figure 1-d is a diagram showing deformation of the lens at low temperature; and

Figure 1-e is a cross section of another conventional lens system.

Referring to Figure 1-a, in order to mount a plastic lens 7 in a lens mount 2, for example of aluminium, the lens 7 is fitted in a fitting portion 5 of the lens mount 2 and is urged against a shoulder 4 which is formed by a stepped portion in the lens mount 2. Then a retaining ring 1, for example of aluminium, which has an exterior thread 6 is threaded onto an interior thread 3 of the lens mount 2 and is urged on the lens 7 at an abutment 8 which is formed by the inner edge of the ring 1. The clearance between the outer periphery of the lens 7 and the inner surface of the fitting portion 5 is very small to ensure an accurate optical axis. As the abutment 8 of the ring 1 is urged directly on the lens surface, there is no clearance.

When the assembled lens mount 2 is heated by atmosphere to relatively high temperature, the lens 7 and the lens mount 2 expand by thermal expansion. As the linear expansion coefficient of the plastic lens 7 is larger than that of the lens mount 2, the lens 7 expands relative to the lens mount 2 and the clearance at the fiting portion 5 decreases. Also, as initial clearance between the abutment 8 and the lens surface is zero, the thermal expansion of the lens 7 results in deformation of the lens. As shown in Figure 1-b, the effect of this is that the abutment 8 of the ring 1 digs into the lens surface and the internal diameter of the ring 1 holds the lens 7 at zero clearance.

Thus, when the ambient temperature is increased the lens expands radially relative to the lens mount. However, the radial expansion is limited by the fitting portion 5 and/or the abutment 8 of the ring 1, so that heat stress is produced in the lens. As shown in Figure 1-c, as the lens cannot expand normally to the optical axis, the lens deforms from line APB to line AP'B and the radius of curvature of the lens decreases from $r_1$ to $r_2$.

When the ambient temperature decreases from the assembled temperature, the lens contracts relative to the lens mount. However, as the lens is held tightly by the abutment 8 of the ring 1, the lens cannot contract radially. Thus, as shown in Figure 1-d the lens deforms from line APB to line AP'B,

and the radius of curvature of the lens increases from $r_1$ to $r_3$.

As described, when the plastic lens is mounted in a conventional lens mount, the radius of curvature of the lens varies according to ambient temperature so that deviation of focus position and other adverse effects occur.

Figure 1-e shows two lenses 21 and 22 inserted by an alignment member 24 which acts to decrease friction between the two lenses. A retaining ring 25 urges tightly the lenses 21 onto a lens mount 23 and, as a result, the above mentioned adverse effect occurs at least at higher temperature.

US—A—3205774 discloses a plastic lens having a peripheral extension molded integrally therewith, this extension being fastened to a tube by screws or cementing.

The present invention seeks to provide a plastic lens having an integrally formed portion which self absorbs heat stress caused by a difference in the linear expansion coefficient as between the plastic lens and its lens mount.

According to the invention, there is provided a plastic lens adapted for mounting in a lens mount by means of a retaining ring both made of material having a different linear expansion coefficient from that of the lens, and comprising a lens body having an effective optical diameter, said lens being characterised by:

a thin portion formed integral with the lens body radially outside the effective optical diameter of the body and thinner in the direction of the optical axis than the minimum thickness of the lens body, and

and end portion radially outside from and thicker in the direction of the optical axis than the thin portion and adapted to be secured by the lens mount and the retaining ring, the arrangement being such that said thin portion is able to absorb internal stress produced in the lens.

By integrally forming the thin portion radially outside the lens body, heat stress produced in the lens is absorbed by deformation of the thin portion without causing adverse effect to the lens body. Thus, the optical properties of the lens are maintained.

The thin portion of the lens may be formed as an annular disc around the lens body or as radial spokes projected from the periphery of the lens body.

The thin portion may be formed by one or more recesses, e.g. V-shaped grooves, on one or both side surfaces of the lens radially outside from the lens body.

The end portion may be formed by a peripheral ring of circular or rectangular cross section.

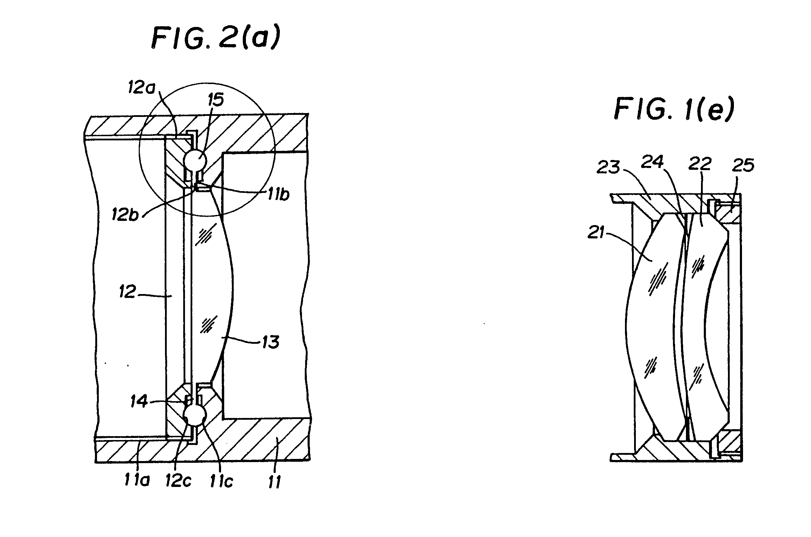

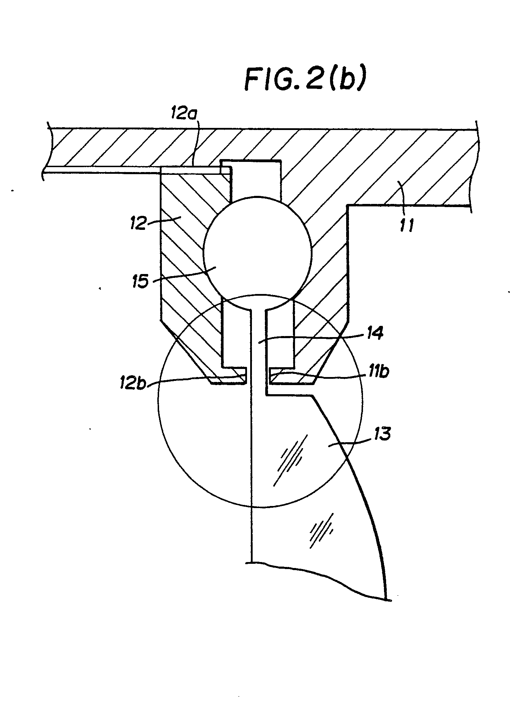

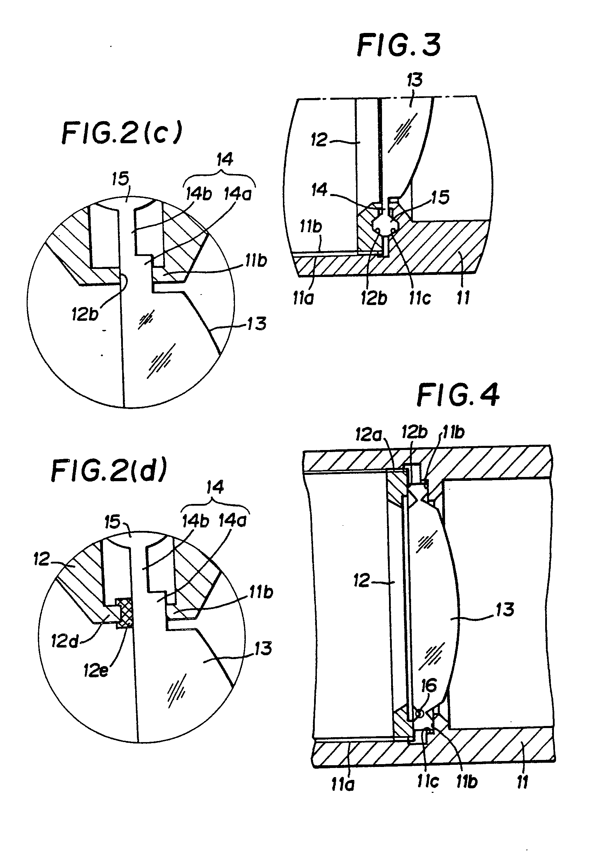

In order that the invention may be better understood, several embodiments thereof will now be described by way of example only and with reference to Figures 2 to 11 of the accompanying drawings in which:—

Figure 2-a is a diagrammatic cross sectional view of a lens system according to one embodiment of the present invention;

Figure 2-b is an enlarged detail of the portion B shown in Figure 2-a;

Figure 2-c is an enlarged detail of the portion C of Figure 2-b showing another embodiment of the present invention;

Figure 2-d is similar to Figure 2-c but showing modification of Figure 2-c;

Figure 3 is a portion of Figure 2-a but showing modification of Figure 2-a;

Figure 4 is a diagrammatic cross sectional view of a lens system according to further embodiment of the present invention;

Figure 5 is a diagrammatic cross sectional view of a lens system according to another embodiment of the present invention;

Figure 6 is a side view of the lens shown in Figure 5;

Figure 7 is a cross section of the modification of the lens shown in Figure 5;

Figure 8 is a side view of a lens according to further embodiment of the present invention;

Figure 9 is a diagrammatic cross sectional view of a lens system according to another embodiment of the present invention;

Figure 10 is a cross section of a portion of a lens system according to still further embodiment of the present invention; and

Figure 11 is similar to Figure 10 but showing modification of Figure 10.

Referring now to Figure 2-a, a lens mount 11 is integrally formed with an internal thread 11a, an abutment 11b and a recessed lens fitting portion 11c. The retaining ring, shown under reference 12, is integrally formed with an outer thread 12a, an abutment 12b and a recessed lens fitting portion 12c. A lens 13 is formed with an annular peripheral ring 15 of generally circular cross section and a thin wall portion 14 integrally connecting the peripheral ring 15 with the lens body.

The lens 13 is inserted in the lens mount 11 and the retaining ring 12 is mounted to hold the lens 13 between itself and the lens mount 11. The lens 13 is tightly held by the peripheral ring 15 which is positioned between the lens fitting portions 11c and 12c.

Figure 2-b shows detail of Figure 2-a. As shown, the thin wall portion 14 is thinner than minimum thickness of the lens body 13 so that heat stress produced in the lens 13 is concentrated in the thin wall portion 14 to deform the portion 14. Thus, the main body of the lens is not deformed by ambient temperature changes. The abutments 11b and 12b provide a small clearance at each side of the main wall portion 14 to allow such thermal deformation. The abutments 11b and 12b act to prevent shift or tilt of the lens body 13 caused by deformation of the thin wall portion 14.

Figure 2-c shows another preferred embodiment in which the thin wall portion 14 shown in Figure 2-a is modified to form a thick positioning portion 14a and a relatively thin portion 14b. The abutments 11b and 12b act as lateral positioning of the lens body. The clearance between the abutments 11b and 12b and the relatively thick portion 14a is determined so as to allow relative sliding only by thermal expansion of contraction. Deformation occurs only in thin portion 14b.

As shown in Figure 2-d, an elastic pad 12e may be inserted between the positioning portion 14a and the abutment 12d of the retaining ring 12. Thus, the abutment 11b of the lens mount 11 can determine accurate positioning of the lens body 13 by absorbing clearance between the abutment 11b and the lens surface. The elastic pad 12e may be attached on the abutment 11b.

The thin portion 14 and the peripheral ring 15 may be formed by a material other than the lens body 13 and may be formed integrally by double forming process. Thus desired properties independent from the optical property of the lens body 13 can be given to the thin portion 14.

The shape of the thin portion 14 is not limited to those shown in Figures 2-a to 2-d. Essentially the thin portion 14 or 14b allows radial material slide by heat expansion of contraction without affecting other portions of the lens. The thickness of the positioning portion 14a should be thicker than the thinnest portion 14b and thinner than thinnest portion of the lens body itself.

When the assembly of lens mount 11 and the lens 13 is carried out at higher ambient temperature, a compression thermal stress may be produced in the lens 13 due to the difference between the linear expansion coefficients of the lens mount 11 and the plastic lens 13. Maximum thermal stress in the thin portion 14 or 14b results in deformation of the thin portion. Thus the lens body 13 itself does not deform due to the thermal stress. Shift or tilt of the optical axis caused by non-uniform deformation of the thin portion 14 or 14b is suppressed by the abutments 11b and 12b which nearly contact with the flat surfaces of the thin portions 14 or by positioning portion 14a of the lens 13. The minimum inside diameter of the lens mount 11 is sufficiently larger than the outside diameter of the lens body 13 itself to allow free relative expansion of the lens body.

As described, by forming the thin portion 14 or 14b at the peripheral portion of the lens 13, thermal stress produced in the lens 13 is effectively absorbed by deformation of the thin portion, and no adverse effect is produced in the lens body itself.

Figure 3 shown another embodiment of the present invention, in which the peripheral ring 15 of the lens 13 is formed as polygonal cross section. Thus, slight manufacture tolerance of the fitting portions 11c and 12c of the lens mount 11 and the hold ring 12 can be absorbed.

Figure 4 shows further embodiment of the present invention, in which V-shaped grooves 16 are formed on both surfaces of the peripheral portion of the lens 13 to form the thin portion. Abutments 11b and 12b of the lens mount 11 and the hold ring 12 hold the outermost portion of the lens 13 due to the pressure of the ring 12. When thermal stress occurs in the lens 13, the highest thermal stress in the thin portion between the grooves 16 causes deformation of the portion such that the angle of V of the groove is decreased. Thus the lens body itself is not affected. The shape of the grooves is not limited to the V shown in Figure 4, and other shapes, e.g. U shape, trapezoidal or W shape, may be used as desired to form the thinnest portion of the lens at the peripheral portion.

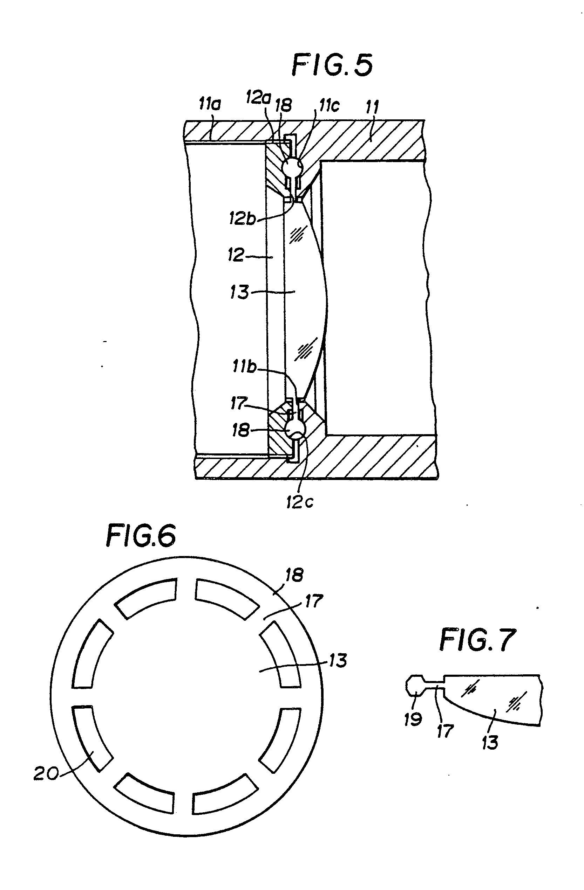

Figures 5 and 6 show another embodiment of the present invention. The lens 13 includes an outermost peripheral ring 18 of circular cross section and thin portion 17 formed between the peripheral ring 18 and the lens body 13. The thin portion 17 has circumferentially spaced openings 20 to form spokes 17. The peripheral ring 18 is held between the fitting portions 11c and 12c of the lens mount 11 and the retaining ring 12 as before. The abutments 11b and 12b maintain positioning of the lens 13. The peripheral ring 18 may be formed as a polygonal cross section such as ring 19 in Figure 7. The cross section of the spoke 17 may be selected as desired, e.g. square, rectangular, polygonal, circular or semi-circular. The cross sectional dimension of the spoke 17 may be varied along radial direction of the lens.

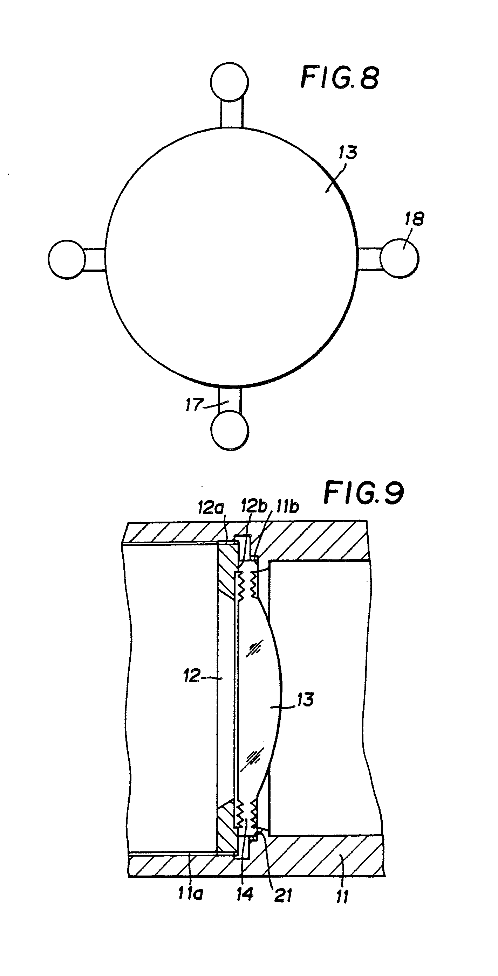

In the embodiment shown in Figure 8, the peripheral ring 18 shown in Figures 5 and 6 is circumferentially separated to form a plurality of end spheres 18 which are each continuous with a respective spoke 17.

In another embodiment shown in Figure 9, the thin portion 14 of the lens 13 is formed by a plurality of V-shaped grooves 21 on both side surfaces of the peripheral portion of the lens 13. Similar to the embodiment shown in Figure 4. abutments 11b and 12b of the lens mount 11 and the retaining ring 12 hold the outermost peripheral portion of the lens 13 tightly. The depths of the V-shaped grooves 21 are determined to absorb thermal stress of the lens and to prevent lateral deformation of the lens. The grooves 21 may be concentrically machined or helically machined as desired.

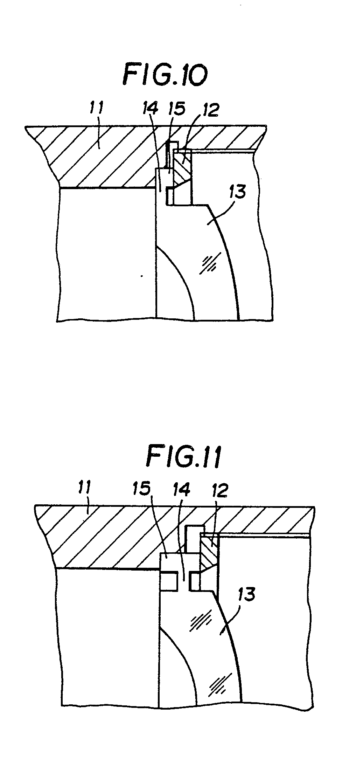

In the embodiment shown in Figures 10 and 11, the lens 13 also forms thin portion 14 and the peripheral portion 15. As shown the peripheral ring 15 has a rectangular cross section and is held between plain surfaces of the lens mount 11 and the retaining ring 12. Thus, machining of the lens mount 11 and the retaining ring 12 is easily compared with the embodiment shown in Figure 2. The position of the thin portion may be at the axially end portion of the lens body 13 as shown in Figure 10 or at axially middle position as shown in Figure 11.

It will be appreciated that by forming the thin portion outside the effective diameter of a plastic lens and thinner than the minimum thickness of the lens body, and by securing the lens to a lens mount through the thinner portion, thermal stress produced in the lens is effectively absorbed without causing adverse effect.

Further, Newton rings of such plastic lens before mounting are normally two or three. By securing the lens by conventional process, the Newton rings are ten or more, and/or irregular rings appear by mechanical stress caused by the retaining ring. As to the lenses shown in the embodiments described above, the Newton rings are not changed after the mounting.

## Claims

1. A plastic lens adapted for mounting in a lens mount by means of a retaining ring both made of material having a different linear expansion coefficient from that of the lens, and comprising a lens body having an effective optical diameter, said lens being characterised by:—
a thin portion (14) formed integral with the lens body (13) radially outside the effective optical diameter of the body and thinner in the direction of the optical axis than the minimum thickness of the lens body, and
an end portion (15) radially outside from and thicker in the direction of the optical axis than the thin portion and adapted to be secured by the lens mount (11) and the retaining ring (12), the arrangement being such that said thin portion is able to absorb internal stress produced in the lens.

2. A lens as claimed in claim 1 characterised in that said thin portion (14) is formed as annular disc around the lens body.

3. A lens as claimed in claim 1 characterised in that said thin portion (14) is formed by one or more recesses on one or both side surfaces of the lens radially outside from the lens body.

4. A lens as claimed in claim 1 characterised in that said thin portion (14) takes the form of a plurality of radial spokes (17) projected from outer periphery of the lens body.

5. A lens as claimed in claim 1 characterised in that said end portion (15) is formed by a peripheral ring.

6. A lens as claimed in claim 5 characterised in that said peripheral ring (15) has generally circular cross section.

7. A lens as claimed in claim 5 characterised in that said peripheral ring (15) has rectangular cross section.

8. A lens as claimed in claim 2 characterised in that said annular disc includes a plurality of openings (20).

9. A lens as claimed in claim 3 characterised in that said recess takes the form of a V-shaped groove (16).

10. A lens as claimed in claim 4 characterised in that said end portion is formed by a spherical end (18) of each said spoke.

11. A lens as claimed in claim 2 characterised in that said thin portion (44) is formed by a radially inner thick disc-like portion (14a) and a radially outer thin portion (14b).

## Patentansprüche

1. Kunststofflinse für das Anbringen in einer Linsenfassung mittels eines Halteringes, wobei beide aus einem Material bestehen, das einen anderen linearen Ausdehnungskoeffizienten hat als das der Linse, mit einem einen wirksamen optischen Durchmesser aufweisenden Linsenkörper, gekennzeichnet durch einen integral mit dem Linsenkörper (13) ausgebildeten dünnen Abschnitt (14), der radial ausserhalb des wirksamen optischen Durchmessers des Körpers angeordnet ist und in Richtung der optischen Achse dünner ist als die maximale Dicke des Linsenkörpers, und durch einen radial ausserhalb davon angeordneten Endabschnitt (15), der in Richtung der optischen Achse dicker ist als der dünne Abschnitt und durch die Linsenfassung (11) und den Haltering (12) befestigbar ist, wobei die Anordnung so getroffen ist, dass der dünne Abschnitt die in der Linse erzeugten inneren Spannungen absorbieren kann.

2. Linse nach Anspruch 1, dadurch gekennzeichnet, dass der dünne Abschnitt (14) als ringscheibe um den Linsenkörper ausgebildet ist.

3. Linse nach Anspruch 1, dadurch gekennzeichnet, dass der dünne Abschnitt (14) redial ausserhalb des Linsenkörpers durch eine oder zwei Ausnehmungen an einer oder beiden Seiten der Linse gebildet ist.

4. Linse nach Anspruch 1, dadurch gekennzeichnet, dass der dünne Abschnitt (14) die Form einer Vielzahl von radialen Speichen (17) hat, die vom Aussenumfang des Linsenkörpers vorstehen.

5. Linse nach Anspruch 1, dadurch gekennzeichnet, dass der Endabschnitt (15) durch einen Umfangsring gebildet ist.

6. Linse nach Anspruch 5, dadurch gekennzeichnet, dass der Umfangsring (15) einen im wesentlichen kreisförmigen Querschnitt hat.

7. Linse nach Anspruch 5, dadurch gekennzeichnet, dass der Umfangsring (15) einen rechtwinkligen Querschnitt hat.

8. Linse nach Anspruch 2, dadurch gekennzeichnet, dass die Ringscheibe eine Vielzahl von Öffnungen (20) umfasst.

9. Linse nach Anspruch 3, dadurch gekennzeichnet, dass die Ausnehmung die Form einer V-förmigen Nut (16) hat.

10. Linse nach Anspruch 4, dadurch gekennzeichnet, dass der Endabschnitt als sphärisches Ende (18) einer jeden Speiche ausgebildet ist.

11. Linse nach Anspruch 1, dadurch gekennzeichnet, dass der dünne Abschnitt (14) durch einen radial inneren, dicken scheibenähnlichen Abschnitt (14a) und einen radial äusseren, dünneren Abschnitt (14b) gebildet ist.

## Revendications

1. Lentille plastique destinée à être montée dans une monture de lentille au moyen d'une bague de retenue, les deux étant construites en un matériau ayant un coefficient de dilatation linéaire différent de celui de la lentille et comprenant un corps de lentille présentant un diamètre optique efficace, ladite lentille étant caractérisée par:

une partie mince (14) formée d'un seul tenant avec le corps de lentille (13) radialement à l'extérieur du diametre optique efficace du corps et plus mince dans le sens de l'axe optique que l'épaisseur minimale du corps de lentille, et

une portion terminale (15) radialement à l'extérieur de la partie mince et plus épaisse dans le sens de l'axe optique que la portion mince, devant être assujettie par la monture (11) de la lentille et la bague de retenue (12), l'agencement étant tel que ladite portion mince soit capable d'absorber la contrainte interne produite dans la lentille.

2. Lentille selon la revendication 1, caractérisé en ce que ladite portion mince (14) est formée comme un disque annulaire autour du corps de la lentille.

3. Lentille selon la revendication 1, caractérisée en ce que ladite portion mince (14) est formée par un ou. plusieurs évidements sur une des surfaces latérales ou les deux de la lentille radialement à l'extérieur du corps de lentille.

4. Lentille selon la revendication 1, caracterisée en ce que ladite partie mince (14) a la forme de plusieurs rayons radiaux (17) partant de la périphérie extérieure du corps de lentille.

5. Lentille selon la revendication 1, caractérisée en ce que ladite portion terminale (15) est formée par une bague périphérique.

6. Lentille selon la revendication 5, caractérisée en ce que ladite bague périphérique (15), présente une section transversale sensiblement circulaire.

7. Lentille selon la revendication 5, caractérisée en ce que ladite bague périphérique (15) présente une section transversale rectangulaire.

8. Lentille selon la revendication 2, caractérisée en ce que ledit disque annulaire comprend une série d'ouvertures (20).

9. Lentilles selon la revendication 3, caractérisée en ce que ledit évidement a la forme d'une gorge en V (16).

10. Lentille selon la revendication 4, caractérisée en ce que ladite portion terminale est formée par une extrémité sphérique (18) de chacun desdits rayons.

11. Lentille selon la revendication 1, caractérisée en ce que ladite portion mince (14) est formée d'une portion en forme de disque épais radialement intérieur (14a) et d'une partie mince radialement extérieure (14b).

## FIG.1(a)

## FIG. 1(b)

# FIG.1(c)

$$\widehat{AP'B} \fallingdotseq APB \cdot (1+\alpha t)$$

$$r_1 > r_2$$

# FIG.1(d)

$$\widehat{AP'B} \fallingdotseq \widehat{APB}(1-\alpha t)$$

FIG. 1(e)

FIG. 2(a)

# FIG.2(b)

## FIG.3

## FIG.2(c)

## FIG.2(d)

## FIG.4

# FIG.5

# FIG.6

# FIG.7

FIG. 8

FIG. 9

## FIG.10

## FIG.11